# EUROPÄISCHE PATENTSCHRIFT

(11) **EP 3 450 217 B1**
(45) Veröffentlichungstag und Bekanntmachung des Hinweises auf die Patenterteilung: **11.08.2021**
(21) Anmeldenummer: 18175662.8
(22) Anmeldetag: 04.06.2018
(51) Int. Cl.: B60C 11/13, B60C 11/04, B60C 11/03

(54) **FAHRZEUGLUFTREIFEN**
PNEUMATIC TYRES FOR A VEHICLE
PNEUMATIQUE DE VÉHICULE

(30) Priorität: 04.09.2017 DE 102017215464
(43) Veröffentlichungstag der Anmeldung: 06.03.2019
(73) Patentinhaber: Continental Reifen Deutschland GmbH, 30165 Hannover (DE)
(72) Erfinder: Schlittenhard, Jan, 30900 Wedemark (DE); Struck, Philipp, 30163 Hannover (DE)
(74) Vertreter: Continental Corporation

(56) Entgegenhaltungen:
- DE-A1-102007 059 292
- DE-A1-102009 003 593
- JP-A- 2001 187 520
- JP-A- 2010 111 155

## Beschreibung

Die Erfindung betrifft einen Fahrzeugluftreifen mit einem Laufstreifen mit zumindest einer von zumindest einer Umfangsrille begrenzten Blockreihe mit durch Querrillen voneinander getrennten Blöcken mit Blockflanken, wobei die Blöcke an der Umfangsrille jeweils einen Blockeckbereich aufweisen, an welchem ein in die Umfangsrille hineinragender, am Grund der Umfangsrille aufsitzender Steg ausgebildet ist, welcher in radialer Richtung an seiner höchsten Stelle eine Höhe von 10% bis 50% der Profiltiefe aufweist und von zu den Blockflanken verlaufenden und an diesen auslaufenden Seitenflächen begrenzt ist.

Ein derartiger Reifen ist beispielsweise aus der DE 10 2007 059 292 A1 bekannt. Offenbart ist ein Reifen mit einem Laufstreifen mit spitzwinkeligen Blockeckbereichen an einer Umfangsrille. Die spitzwinkeligen Blockeckbereiche sind am Rillengrund von einem bugfenderartigen Vorsprung umlaufen. Beim Fahren auf nasser Fahrbahn sollen diese Vorsprünge Schwankungen in der Strömungsgeschwindigkeit des in der Rille strömenden Luft-Wasser-Gemisches verringern und derart die Wasserableitung verbessern.

Aus der DE 10 2005 052 604 A1 ist ein Fahrzeugluftreifen mit einem Laufstreifen bekannt, welcher Profilblöcke mit Vorsprüngen an spitzwinkeligen Blockeckbereichen aufweist, wobei die Vorsprünge von in die Umfangsrille hineinragenden Blockflanken sowie einer zwischen den Blockflanken ausgebildeten kantenfreien Verbindungsfläche begrenzt sind. Der Rundungsradius der Verbindungsfläche und die Höhe des Vorsprunges verringern sich kontinuierlich von der Oberfläche des Blockes in Richtung Rillengrund. Derartige Vorsprünge sollen ein weitgehend verwirbelungsfreies Teilen des in der Umfangsrille strömenden Wassers bewirken, sodass die Wassermengen zwischen der Umfangsrille und den Querrillen aufgeteilt werden können.

Ferner ist aus der DE 10 2009 003 593 A1 ein Fahrzeugluftreifen mit einem Laufstreifen mit zumindest einer Blockreihe, welche seitlich von zumindest einer Umfangsrille begrenzt ist, bekannt. Die Blockreihe ist durch in die Umfangsrille einmündende Quer- oder Schrägrillen in Blöcke gegliedert. An den Rillenkreuzungen der Quer- bzw. Schrägrillen mit der Umfangsrille sind an den Rillengründen Stege ausgebildet. In der jeweiligen Quer- bzw. Schrägrille erstrecken sich die Stege zwischen den Blöcken, in der Umfangsrille sind sie an die eine Rillenflanke angebunden, wobei die Stege in Draufsicht T-förmig oder in Umfangsrichtung umlaufend ausgebildet sind. Solche Stege sollen eine hohe Steifigkeit der Blöcke bei Aufrechterhaltung einer großen Aufnahmekapazität für Wasser, Matsch oder Schnee in den Querrillen ermöglichen.

Die JP 2001 187 520 A offenbart einen Fahrzeugluftreifen mit einem Laufstreifen mit einem Blockprofil. An den Blockflanken der Blöcke sind flache, beispielsweise quaderförmig Vorsprünge ausgebildet, welche sich beim Fahren auf Schnee und Eis vorteilhaft auswirken sollen.

Aus der JP 2010 111 155 A ist ferner ein Fahrzeugluftreifen mit einem Laufstreifen mit einem Blockprofil bekannt, an dessen Blockecken bugfenderartige, in Draufsicht beispielsweise kreisförmige Vorsprünge ausgebildet sind. Diese sollen im Hinblick auf den Rollwiderstand und des Nassbremsverhalten von Vorteil sein.

Der Erfindung liegt daher die Aufgabe zugrunde, bei einem Reifen der eingangs genannten Art beim Fahren auf nasser Fahrbahn die Aquaplaninggefahr gegenüber den bekannten Reifen noch weiter zu reduzieren.

Die gestellte Aufgabe wird erfindungsgemäß durch einen Reifen nach Anspruch 1 gelöst.

Bei einem erfindungsgemäßen Reifen werden die am Rillengrund der Umfangsrille strömenden Wassermengen durch die Stege unmittelbar in die Querrillen, welche die Blöcke in Umfangsrichtung begrenzen und zur Laufstreifenaußenseite führen, abgeleitet, sie reißen dabei die oberen Wasserschichten mit, wodurch ein sehr effektive Sogwirkung auftritt. Durch die erfindungsgemäß getroffenen Maßnahmen ist die Wasserableitung aus den Umfangsrillen daher deutlich erhöht und es sind die Aquaplaningeigenschaften gegenüber bekannten Reifen verbessert. Da die Stege höchstens bis auf 50% der Profiltiefe reichen, bleibt weiterhin ein großer Rillenquerschnitt im Bereich der Stege erhalten, was für das Wasserdraingevermögen ebenfalls von Vorteil ist. Durch die an den Blockflanken auslaufenden Seitenflächen der Stege wird ferner eine verwirbelungsfreie oder zumindest weitgehend verwirbelungsfreie Wasserableitung ermöglicht.

Durch die geneigten Seitenflächen sind die Stege einerseits besonders stabil und andererseits wird Wasser über die geneigten Seitenflächen auf eine besonders strömungsoptimierte Weise aus der Umfangsrille abgeleitet.

Aus diesem Grund ist auch der bugfenderartige Vorsprung von Vorteil.

Gemäß einer bevorzugten Ausführungsvariante sind die Stege an Blockeckbereichen von Blöcken einer Blockreihe ausgebildet, welche laufstreifeninnenseitig durch die Umfangsrille begrenzt ist. Dies begünstigt die Wasserableitung zur Laufstreifenaußenseite und verbessert derart zusätzlich die Aquaplaningeigenschaften des Reifens.

Bei einem Fahrzeugluftreifen mit einem laufrichtungsgebunden ausgeführten Laufstreifen ist es besonders vorteilhaft, wenn die Stege an den beim Abrollen des Reifens bei Vorwärtsfahrt zuerst in den Untergrund eintretenden Blockeckbereichen vorgesehen sind. Darüber hinaus ist bei solchen Laufstreifen eine bevorzugte Ausführungsvariante dadurch gekennzeichnet, dass die Blockreihe durch die Umfangsrille von einer weiteren Blockreihe getrennt ist, wobei die Blöcke aus der einen Blockreihe zu den Blöcken aus der weiteren Blockreihe in Umfangsrichtung versetzt sind, wobei an Blockeckbereichen der Blöcke der weiteren Blockreihe ebenfalls Stege angeordnet sind, sodass von den Blockeckbereichen der Blöcke Stege abwechselnd in die Umfangsrille hineinragen. Durch die derart "doppelseitige" Anordnung der Stege wird Wasser besonders effektiv aus der Umfangsrille abgeleitet, wodurch die Aquaplaninggefahr zusätzlich reduziert ist.

Der Wasserfluss in der Umfangsrille wird auf eine für das Wasserdrainagevermögen besonders vorteilhafte Weise zwischen der Umfangsrille und den Querrillen aufgeteilt, wenn die Höhe der Stege an ihrer höchsten Stelle in radialer Richtung bis zu 25% der Profiltiefe beträgt.

Gemäß weiteren Ausführungsvarianten ist die Höhe der Stege über ihrer Erstreckung konstant oder es nimmt die Höhe der Stege zu den freien Enden der Stege kontinuierlich auf 0% bis 10% der Profiltiefe ab.

Besonders vorteilhaft ist es, wenn an Blockeckbereichen, an welchen Stege ausgebildet sind, die Blockflanken in Draufsicht unter einem Winkel von 40° bis 110°, insbesondere von 80° bis 100°, zusammenlaufen. Derart zusammenlaufende Blockflanken zeigen im Hinblick auf Wasseraufteilung einen zum Effekt der Stege synergetischen Effekt.

Die Aufteilung des Wassers zwischen den Umfangsrillen und den weiteren Rillen erfolgt in einem für die Aquaplaningeigenschaften besonders vorteilhaftem Verhältnis, wenn zwischen dem in der Umfangsrille befindlichen Endabschnitt des Steges und dem in axialer Richtung benachbarten Profilpositiv ein Rillendurchgang in der Umfangsrille verläuft, welcher an seiner schmalsten Stelle einer Breite von 0,5 mm bis 8,0 mm, insbesondere von 2,0 mm bis 6,0 mm, aufweist.

Eine zumindest weitgehend verwirbelungsfreie Aufteilung der Wasserströmung in der Umfangsrille wird dadurch unterstützt, dass, gemäß einer bevorzugten Ausführungsvariante, die Stege an ihrem in der Umfangsrille liegenden Enden gerundet sind.

Bevorzugter Weise weist der bugfenderartige Vorsprung in radialer Richtung eine Höhe von 5% bis 25% der Profiltiefe auf. Ein Vorsprung dieser Höhe trägt einerseits zur verwirbelungsfreien Aufteilung der Wasserströmung bei, wobei er gleichzeitig den für das Wasserdrainagevermögen wichtigen Querschnitt der Rillen kaum verringert. In diesem Zusammenhang ist es ferner von Vorteil, wenn der Vorsprung einen Durchmesser von 0,5 mm bis 3,0 mm aufweist.

Die Erfindung betrifft ferner die Verwendung eines Fahrzeugluftreifens nach Anspruch 2 auf Fahrzeugen mit Achsen mit zwei Achspositionen, mit einem asymmetrischen Laufstreifen mit einem bei montiertem Reifen der Fahrzeugaußenseite zugeordneten und mit einem bei montiertem Reifen der Fahrzeuginnenseite zugeordneten Laufstreifenbereich, wobei, betrachtet bei Sicht nach vorne, bei dem auf der rechten Achsposition montiertem Reifen die an Blockeckbereichen Stege aufweisende Blockreihe in dem der Fahrzeugaußenseite zugeordneten Laufstreifenbereich vorgesehen ist und dass bei dem auf der linken Achsposition montiertem Reifen die an Blockeckbereichen Stege aufweisende Blockreihe in dem der Fahrzeuginnenseite zugeordneten Laufstreifenbereich vorgesehen ist. Meistens sind Fahrbahnen bzw. Fahrbahnseiten zu den Fahrbahnrändern geneigt, damit Wasser entsprechend abfließen kann. Da in den meisten Ländern Rechtsverkehr herrscht, ermöglicht eine derartige Reifenmontage, die sich am rechten Fahrbahnrand ansammelnden Wasserschichten besser vom Reifen abzuleiten.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1a eine Draufsicht auf einen schulterseitigen Umfangsbereich eines Laufstreifens eines Fahrzeugluftreifens mit einer ersten Ausführungsvariante der Erfindung,
Fig. 1b eine vergrößerte Schrägansicht eines Details des Laufstreifens aus Fig. 1a,
Fig. 2 eine Schrägansicht einer zweiten Ausführungsvariante anhand einer Detaildarstellung anlog zu Fig. 1b,
Fig. 3 eine Draufsicht auf ein Detail des Laufstreifens mit einer dritten Ausführungsvariante der Erfindung,
Fig. 4a eine Draufsicht auf einen mittleren Umfangsbereich eines Laufstreifens mit einer vierten Ausführungsvariante der Erfindung und
Fig. 4b eine Schrägansicht eines Details des Laufstreifens aus Fig. 4a.

Erfindungsgemäß ausgeführte Fahrzeugluftreifen sind Fahrzeugluftreifen in Radialbauart, insbesondere für Personenkraftwagen, Vans oder Light-Trucks.

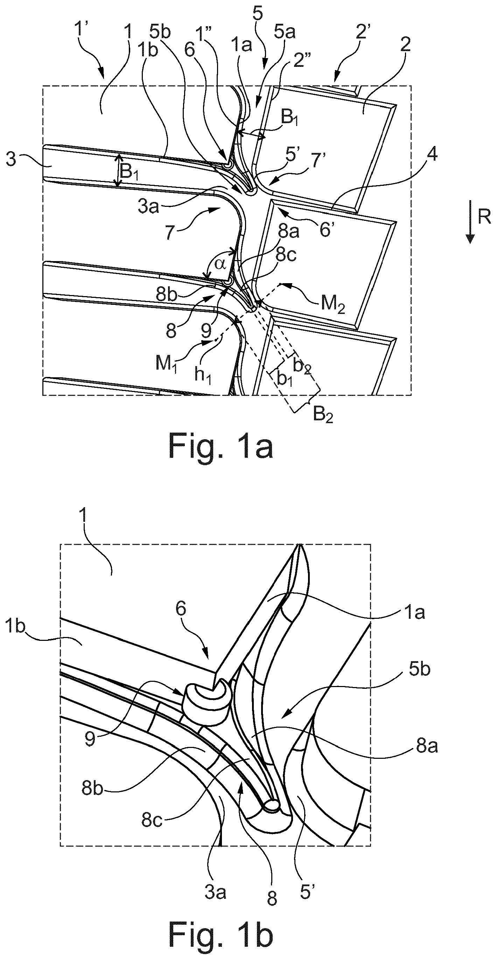

In Fig. 1a sind von einem Laufstreifen zu einer schulterseitigen Blockreihe 1' gehörende schulterseitige Blöcke 1 sowie zu einer zu dieser benachbart verlaufenden Blockreihe 2' gehörende Blöcke 2 gezeigt. Ist der Laufstreifen laufrichtungsgebunden ausgeführt, ist der Fahrzeugluftreifen derart am Fahrzeug zu montieren, dass er die in Fig. 1 durch den Pfeil R symbolisierte Abrollrichtung bei Vorwärtsfahrt aufweist.

In Umfangsrichtung aufeinanderfolgende schulterseitige Blöcke 1 sind durch Querrillen 3 voneinander getrennt, welche an der Laufstreifenperipherie zumindest über den Großteil ihrer Erstreckung eine Breite B₁ von 4,0 mm bis 8,0 mm aufweisen. Die Blöcke 2 der Blockreihe 2' sind durch schmale Querrillen 4 voneinander getrennt, welche an der Laufstreifenperipherie eine Breite von insbesondere 2,0 mm bis 3,5 mm aufweisen. Die Querrillen 3 und die Querrillen 4 verlaufen in Draufsicht jeweils parallel zueinander, zur axialen Richtung unter einem Winkel von bis zu 35° und sind zur axialen Richtung gleichsinnig geneigt, wobei die Querrillen 4 im Wesentlichen in Fortsetzung der Querrillen 3 verlaufen.

Zwischen der schulterseitigen Blockreihe 1' und der Blockreihe 2' verläuft eine in Draufsicht zickzackförmige Umfangsrille 5, die an der Laufstreifenperipherie von Blockkanten 1", 2" begrenzt ist, die in Draufsicht gerade, parallel zueinander sowie unter einem von der Umfangsrichtung um 5° bis 25° abweichenden Winkel verlaufen. Im Bereich der Blockkanten 1 ", 2" weist die Umfangsrille 5 Hauptabschnitte 5a der Breite B₁ auf. Zwischen in Umfangsrichtung unmittelbar aufeinanderfolgenden Hauptabschnitten 5a weist die Umfangsrille 5 Kreuzungsbereiche 5b auf, an welchen die Querrillen 3, 4 aus den Blockreihen 1', 2' einmünden.

Beim gezeigten Ausführungsbeispiel sind die Umfangsrille 5 sowie die Querrillen 3, 4 zumindest an ihren Einmündungsbereichen in die Umfangsrille 5 in der jeweils vorgesehenen Profiltiefe ausgeführt, welche üblicherweise 6,0 mm bis 13,0 mm beträgt. Die Tiefe der Querrillen 3 nimmt insbesondere zur Laufstreifenaußenseite ab.

Jeder schulterseitige Block 1 ist im Hauptabschnitt 5a durch eine Blockflanke 1a und zu den an ihn angrenzenden Querrillen 3 durch je eine Blockflanke 1b begrenzt. An der Umfangsrille 5 weist jeder schulterseitige Block 1 einen spitzen Blockeckbereich 6 und einen gerundeten Blockeckbereich 7 auf, wobei die Blockflanke 1a am spitzen Blockeckbereich 6 mit der einen Blockflanke 1b in Draufsicht einen Winkel α von 40° bis 110°, insbesondere von 80° bis 100°, einschließt und am gerundeten Blockeckbereich 7 über einer Rundung in die andere Blockflanke 1b übergeht. Beim Abrollen tritt der spitze Blockeckbereich 6 jedes schulterseitigen Blockes 1 vor dem gerundeten Blockeckbereich 7 in den Untergrund ein.

Jeder mittlere Block 2 weist an der Umfangsrille 5 einen spitzen Blockeckbereich 6' und einen gerundeten Blockeckbereich 7' auf, wobei beim Abrollen der gerundete Blockeckbereich 7' vor dem spitzen Blockeckbereich 6' in den Untergrund eintritt. An jedem Kreuzungsbereich 5b liegen daher die gerundeten Blockeckbereiche 7, 7' einander schräg gegenüber. Analoges gilt für die an jedem Kreuzungsbereich 5b befindlichen spitzen Blockeckbereiche 6, 6'. An dem in Fig. 1a unteren Kreuzungsbereich 5b ist eine Hilfslinie h₁ eingezeichnet, welche die Mittelpunkte M₁ und M₂ jener Kreise verbindet, welche den Rundungen der gerundeten Blockeckbereiche 7, 7' an den Blockoberflächen zugrunde liegen. Der Kreuzungsbereich 5b weist an der Laufstreifenperipherie eine entlang der Hilfslinie h₁ ermittelte Breite B₂ von 6,0 mm bis 15,0 mm auf.

Wie Fig. 1b zeigt, ist am spitzen Blockeckbereich 6 jedes schulterseitigen Blockes 1 ein in den Kreuzungsbereich 5b hineinragender buhnenartige Steg 8 ausgebildet, welcher eine am Rillengrund der Umfangsrille 5 ausgebildete Erhebung ist und zwischen den einander gegenüberliegenden gerundeten Blockeckbereichen 7, 7' der Blöcke 1, 2 ausläuft (Fig. 1a). Gemäß Fig. 1a endet der Steg 8 beim gezeigten Ausführungsbeispiel in Draufsicht an der bereits erwähnten Hilfslinie h₁. Der Steg 8 kann ferner vor der Hilfslinie h₁ in einem senkrecht zur Hilfslinie h₁ ermittelten Abstand von höchstens 3,0 mm enden oder die Hilfslinie h₁ um bis zu 3,0 mm - ebenfalls senkrecht zur Hilfslinie h₁ ermittelt - überragen.

Der Steg 8 wird zu seinem freien Ende schmäler, erstreckt sich in radialer Richtung gegenüber der tiefsten Stelle des Rillengrundes der Umfangsrille 5 bis in eine Höhe von 10% bis 50%, insbesondere von mindestens 25%, der Profiltiefe und ist in radialer Richtung durch eine parallel zum Rillengrund orientierte Deckfläche 8c begrenzt.

Der Steg 8 ist seitlich durch eine langgezogene Seitenfläche 8b begrenzt, welche an der Blockflanke 1b ausläuft (Fig. 1b) und im Bereich des Steges 8 in Draufsicht leicht bogenförmig verläuft. Die Übergänge der Seitenfläche 8b zur Deckfläche 8c sowie zum Grund der Querrille 3 sind gerundet ausgeführt. Zwischen der Seitenfläche 8b und dem gerundeten Blockeckbereich 7 des in Umfangsrichtung benachbarten schulterseitigen Blockes 1 verbleibt ein in Draufsicht entsprechend gerundeter Einmündungsabschnitt 3a der Querrille 3. Der Einmündungsabschnitt 3a weist zwischen dem Ende des Steg 8 und dem gerundeten Blockeckbereich 7 des in Umfangsrichtung benachbarten schulterseitigen Blockes 1 eine Breite b₁ auf, welche beim gezeigten Ausführungsbeispiel entlang der Hilfslinie h₁ ermittelt wird und 50% bis 75%, insbesondere mindestens 60%, der Breite B₂ des Kreuzungsbereiches 5b beträgt.

Zur Umfangsrille 5 ist der Steg 8 durch eine in Draufsicht leicht S-förmig geschwungene Seitenfläche 8a begrenzt, welche an der an der Umfangsrille 5 ausgebildeten Blockflanke 1a etwa mittig ausläuft. Die Seitenfläche 8a ist, im Querschnitt betrachtet, zur radialen Richtung unter einem sich über ihren Verlauf ändernden Winkel geneigt, wobei die Neigung der Seitenfläche 8a ausgehend von ihrem mittleren Bereich zu ihren beiden Enden abnimmt. An ihrer zur radialen Richtung am stärksten geneigten Stelle verläuft die Seitenfläche 8a zur radialen Richtung unter einem Winkel von 30° bis 45°. Die Übergänge der Seitenfläche 8a zur Deckfläche 8c sowie zum Grund der Umfangsrille 5 sind gerundet ausgeführt. Zwischen der Seitenfläche 8a und dem gerundeten Blockeckbereich 7' des in axialer Richtung benachbarten mittleren Blockes 2 verbleibt ein schmaler Rillendurchgang 5' (siehe insbesondere Fig. 1b) der Umfangrille 5, welcher zwischen dem Ende des Steges 8 und dem gerundeten Blockeckbereich 7' entlang der Hilfslinie h₁ eine Breite b₂ von 25% bis 50%, insbesondere höchstens 40%, der Breite B₂ des Kreuzungsbereiches 5b aufweist.

Auf jedem Steg 8 ist ein den spitzen Blockeckbereich 6 umlaufender im Wesentlichen kreiszylindrischer bugfenderartiger Vorsprung 9 ausgebildet, welcher in radialer Richtung eine Höhe von 5% bis 25% der Profiltiefe und einen Durchmesser von 0,5 mm bis 3,0 mm aufweist.

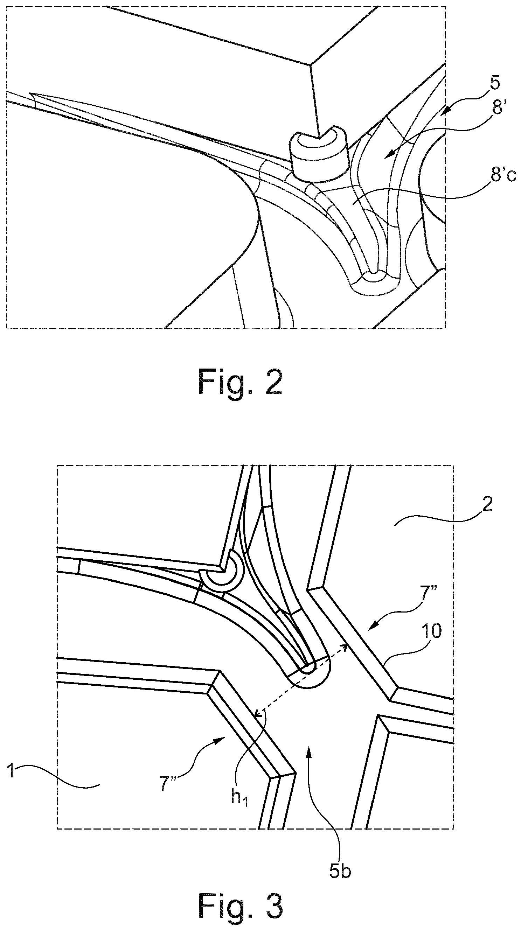

Bei der in Fig. 2 gezeigten Ausführungsvariante ist ein Steg 8' vorgesehen, welcher sich vom Steg 8 durch eine zur radialen Richtung geneigte Deckfläche 8'c unterscheidet. Die Höhe des Steges 8' nimmt zum freien Ende des Steges 8' kontinuierlich auf 0% bis 10% der Profiltiefe ab, sodass der Steg 8' am Rillengrund der Umfangsrille 5 auch auslaufen kann.

Die in Fig. 3 gezeigte Ausführungsvariante unterscheidet sich von der in Fig. 1a gezeigten Ausführungsvariante dadurch, dass die Blöcke 1, 2 anstelle von gerundeten Blockeckbereichen 7 abgeschrägte und in Draufsicht parallel zueinander verlaufende Blockeckbereiche 7" aufweisen. In Fig. 3 ist wieder eine Hilfslinie h₁ eingezeichnet, welche bei dieser Variante die die abgeschrägten Blockeckbereiche 7" an der Oberfläche der Blöcke 1, 2 begrenzenden Blockkanten 10 in Draufsicht halbiert.

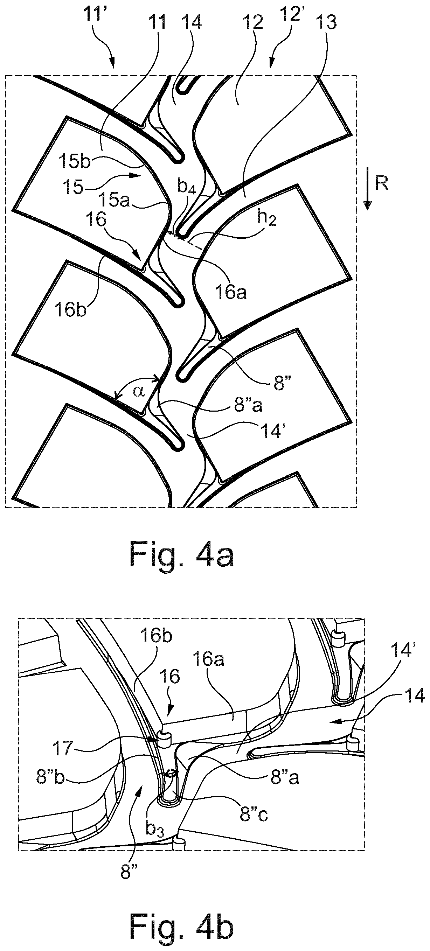

Fig. 4a zeigt eine weitere Variante mit einem laufrichtungsgebundenen Laufstreifen, von welchem zwei im zentraler Laufstreifenbereich befindliche Blockreihen 11', 12' mit Blöcken 11, 12 gezeigt sind. In jeder Laufstreifenhälfte verlaufen als Hauptrillen des Laufstreifens Querrillen 13, welche in jeder Laufstreifenhälfte parallel zueinander, unter einem von der axialen Richtung um bis zu 45° abweichenden Winkel und leicht gebogen verlaufen, in Umfangsrichtung benachbarte Blöcke 11, 12 voneinander trennen und dem Laufstreifen in Draufsicht ein gepfeiltes Profil verleihen. Die Abrollrichtung des Reifens bei Vorwärtsfahrt ist durch den Pfeil R angedeutet und derart, dass die Querrillen 13 beim Abrollen des Reifens zuerst mit ihren laufstreifeninnenseitigen Enden in die Bodenaufstandsfläche eintreten. Entlang des Reifenzenits verläuft eine in Draufsicht zickzackförmige Umfangsrille 14, in welche die Querrillen 13 einmünden. Die nicht gezeigten Laufstreifenbereiche können in bekannter Weise ausgeführt sein.

Die Blöcke 11 der Blockreihe 11' sind zu den Blöcken 12 der Blockreihe 12' in Umfangsrichtung versetzt und gleichzeitig, abgesehen vom Versatz, in Draufsicht bezüglich der Äquatorialebene des Reifens im wesentlichen spiegelsymmetrisch ausgeführt.

Jeder Block 11, 12 weist an der Umfangsrille 14 einen in die Querrille 13 hineinragenden gerundeten Blockeckbereich 15 und einen spitzen Blockeckbereich 16 auf. Die Blockeckbereiche 15, 16 sind dabei derart ausgebildet, dass beim Abrollen des Reifens zuerst der spitze Blockeckbereich 16 in den Untergrund eintritt. Der gerundete Blockeckbereich 15 ist durch einen die Umfangsrille 14 begrenzenden Flankenabschnitt 15a und einen an diesen anschließenden eine Querrille 13 begrenzenden Flankenabschnitt 15b gebildet. Am spitzen Blockeckbereich 16 laufen eine die Umfangsrille 14 begrenzende Blockflanke 16a und eine eine Querrille 13 begrenzende Blockflanke 16b in Draufsicht unter dem bereits erwähnten Winkel α zusammen.

Wie insbesondere Fig. 4b zeigt, ist an jedem spitzen Blockeckbereich 16 der Blöcke 11,12 ein im Wesentlichen in Richtung der Verlaufes der angrenzenden Querrille 13 in die Umfangsrille 14 hineinragender flacher buhnenartige Steg 8" ausgebildet, welcher eine Grundanhebung ist und sich geringfügig über die Äquatorialebene des Reifens hinaus und daher in die andere Laufstreifenhälfte hineinerstreckt.

In Fig. 4a ist in der Umfangsrille 14 eine Hilfslinie h₂ eingezeichnet, welche in Draufsicht ausgehend vom Übergang zwischen einem Flankenabschnitt 15a, welcher einen gerundeten Blockeckbereich 15 begrenzt, und einer Blockflanke 16a, welche einen Abschnitt der Umfangsrille 14 begrenzt, senkrecht zur gegenüberliegenden eine Querrille 13 begrenzenden Flankenabschnitt 15b verläuft. Der Steg 8" endet beim gezeigten Ausführungsbeispiel in Draufsicht an der Hilfslinie h₂.

Wie insbesondere Fig. 4b zeigt, erstreckt sich der Steg 8" in radialer Richtung gegenüber der tiefsten Stelle des Rillengrundes der Umfangsrille 14 bis in eine Höhe von 10% bis 50%, insbesondere von mindestens 25%, der Profiltiefe und ist in radialer Richtung durch eine ebene Deckfläche 8"c begrenzt, welche zum freien Ende des Steges 8" leicht abfällt und eine im Wesentlichen konstante Breite b₃ von 2,0 mm bis 3,0 mm aufweist

Der Steg 8" ist durch eine an der Blockflanke 16b auslaufende Seitenfläche 8"b und zur Umfangsrille 14 durch eine Seitenfläche 8"a begrenzt, welche an der an der Umfangsrille 14 befindlichen Blockflanke 16a ausläuft. Die Seitenfläche 8"a ist im Querschnitt betrachtet zur radialen Richtung unter einem sich über ihren Verlauf ändernden Winkel geneigt, wobei die Neigung der Seitenfläche 8"a ausgehend von ihrem mittleren Bereich zu ihren beiden Enden abnimmt. An ihrer zur radialen Richtung am stärksten geneigten Stelle verläuft die Seitenfläche 8"a zur radialen Richtung unter einem Winkel von 15° bis 45°. Zwischen der Seitenfläche 8"a und dem abgerundeten Blockeckbereich 15 des jeweils in axialer Richtung gegenüberliegenden Blockes 11 bzw. 12 verbleibt ein schmaler Rillendurchgang 14' in der Umfangrille 14, welcher eine Breite b₄ von 0,5 mm bis 8,0 mm aufweist (Fig. 4a).

Auf den Stegen 8" ist jeweils ein den spitzen Blockeckbereich 16 umgebender im Wesentlichen kreiszylindrischer bugfenderartiger Vorsprung 17 ausgebildet, welcher in radialer Richtung eine Höhe von 5% bis 25% der Profiltiefe und einen Durchmesser von 0,5 mm bis 3,0 mm aufweist.

Die Erfindung ist auf die beschriebenen Ausführungsvarianten nicht beschränkt. Insbesondere können erfindungsgemäße Fahrzeugluftreifen auch asymmetrisch sowie nicht laufrichtungsgebunden ausgeführte Laufstreifen aufweisen.

### Bezugszeichenliste

- 1 .............................: schulterseitiger Block
- 1' ............................: schulterseitige Blockreihe
- 1"...........................: Blockkanten
- 1a, 1b......................: Blockflanke
- 2 .............................: mittlerer Block
- 2' ............................: Blockreihe
- 2"...........................: Blockkanten
- 3 .............................: Querrille
- 3a ...........................: Einmündungsabschnitt
- 4 .............................: Querrille
- 5 .............................: Umfangsrille
- 5a ...........................: Hauptabschnitt
- 5b ...........................: Kreuzungsbereich
- 5' ............................: Rillendurchgang
- 6 .............................: spitzer Blockeckbereich
- 7, 7' ........................: gerundeter Blockeckbereich
- 7"...........................: abgeschrägter Blockeckbereich
- 8, 8\8"..................: Steg
- 8a, 8"a ...................: Seitenfläche
- 8b, 8"b ...................: Seitenfläche
- 8c, 8'c, 8"c.....: Deckfläche
- 9 .............................: Vorsprung
- 10 ...........................: Blockkante
- 11, 12 .....................: Block
- 11', 12' ...................: Blockreihe
- 13 ...........................: Querrille
- 14 ...........................: Umfangsrille
- 14' ..........................: Rillendurchgang
- 15 ...........................: abgerundeter Blockeckbereich
- 15a, 15b..................: Flankenabschnitt
- 16 ...........................: spitzer Blockeckbereich
- 16a, 16b..................: Blockflanke
- 17 ...........................: Vorsprung
- B₁, B₂ .....................: Breite
- b₁, b₂, b₃, b₄ ............: Breite
- h₁, h₂.......................: Hilfslinie
- R ............................: Abrollrichtung (Pfeil)
- M₁, M₂....................: Mittelpunkt
- α .............................: Winkel

## Patentansprüche

1. Fahrzeugluftreifen mit einem Laufstreifen mit zumindest einer von zumindest einer Umfangsrille (5, 14) begrenzten Blockreihe (1', 2', 11', 12') mit durch Querrillen (3, 13) voneinander getrennten Blöcken (1, 2, 11, 12) mit Blockflanken (1a, 1b, 16a, 16b), wobei die Blöcke (1, 2, 11, 12) an der Umfangsrille (5, 14) jeweils einen Blockeckbereich (6, 16) aufweisen, an welchem ein in die Umfangsrille (5, 14) hineinragender, am Grund der Umfangsrille (5, 14) aufsitzender Steg (8, 8', 8") ausgebildet ist,
welcher in radialer Richtung an seiner höchsten Stelle eine Höhe von 10% bis 50% der Profiltiefe aufweist und von zu den Blockflanken (1a, 1b, 16a, 16b) verlaufenden und an diesen auslaufenden Seitenflächen (8a, 8b, 8"a, 8"b) begrenzt ist,
**dadurch gekennzeichnet,**
**dass** die Seitenflächen (8a, 8b, 8"a, 8"b) der Stege (8, 8', 8") in Draufsicht zumindest abschnittsweise zueinander konkav gekrümmt sowie, im Querschnitt betrachtet, zumindest abschnittsweise zur radialen Richtung geneigt sind,
wobei auf den Stegen (8, 8', 8") ein den spitzen Blockeckbereich (6, 16) umlaufender bugfenderartiger Vorsprung (9, 17) ausgebildet ist.

2. Fahrzeugluftreifen nach Anspruch 1, **dadurch gekennzeichnet, dass** die Stege (8, 8', 8") an Blockeckbereichen von Blöcken (1, 2, 11, 12) einer Blockreihe (1', 2', 11', 12') ausgebildet sind, welche laufstreifeninnenseitig durch die Umfangsrille (5, 14) begrenzt ist.

3. Fahrzeugluftreifen nach Anspruch 1 oder 2, **dadurch gekennzeichnet, dass** der Laufstreifen laufrichtungsgebunden ausgeführt ist und dass die Stege (8, 8', 8") an den beim Abrollen des Reifens bei Vorwärtsfahrt zuerst in den Untergrund eintretenden Blockeckbereichen (6, 16) vorgesehen sind.

4. Fahrzeugluftreifen nach einem der Ansprüche 1 bis 3, **dadurch gekennzeichnet, dass** der Laufstreifen laufrichtungsgebunden ausgeführt ist und dass die Blockreihe (11', 12') durch die Umfangsrille (14) von einer weiteren Blockreihe (11', 12') getrennt ist, wobei die Blöcke (11, 12) aus der einen Blockreihe (11', 12') zu den Blöcken (11, 12) aus der weiteren Blockreihe (11', 12') in Umfangsrichtung versetzt sind, wobei an Blockeckbereichen (16) der Blöcke (11, 12) der weiteren Blockreihe (11', 12') ebenfalls Stege (8") angeordnet sind, sodass von den Blockeckbereichen (16) der Blöcke (11, 12) Stege (8") abwechselnd in die Umfangsrille (14) hineinragen.

5. Fahrzeugluftreifen nach einem der Ansprüche 1 bis 4, **dadurch gekennzeichnet, dass** die Höhe der Stege (8, 8', 8") an ihrer höchsten Stelle in radialer Richtung bis zu 25% der Profiltiefe beträgt.

6. Fahrzeugluftreifen nach einem der Ansprüche 1 bis 5, **dadurch gekennzeichnet, dass** die Höhe der Stege (8, 8', 8") über ihrer Erstreckung entweder konstant ist oder zu den freien Enden der Stege (8, 8', 8") kontinuierlich auf 0% bis 10% der Profiltiefe abnimmt.

7. Fahrzeugluftreifen nach einem der Ansprüche 1 bis 6, **dadurch gekennzeichnet, dass** an Blockeckbereichen (6, 16), an welchen Stege (8, 8', 8") ausgebildet sind, die Blockflanken (1a, 1b, 16a, 16b) in Draufsicht unter einem Winkel (α) von 40° bis 110°, insbesondere von 80° bis 100°, zusammenlaufen.

8. Fahrzeugluftreifen nach einem der Ansprüche 1 bis 7, **dadurch gekennzeichnet, dass** zwischen dem in der Umfangsrille (5, 14) befindlichen Endabschnitt des Steges (8, 8', 8") und dem in axialer Richtung benachbarten Profilpositiv ein Rillendurchgang (5', 14') in der Umfangsrille (5, 14) verläuft, welcher an seiner schmalsten Stelle einer Breite (b₂, b₄) von 0,5 mm bis 8,0 mm, insbesondere von 2,0 mm bis 6,0 mm, aufweist.

9. Fahrzeugluftreifen nach einem der Ansprüche 1 bis 8, **dadurch gekennzeichnet, dass** die Stege (8, 8', 8") an ihrem in der Umfangsrille (5, 14) liegenden Enden gerundet sind.

10. Fahrzeugluftreifen nach einem der Ansprüche 1 bis 9, **dadurch gekennzeichnet, dass** der bugfenderartige Vorsprung (9, 17) in radialer Richtung eine Höhe von 5% bis 25% der Profiltiefe aufweist.

11. Fahrzeugluftreifen nach einem der Ansprüche 1 bis 10, **dadurch gekennzeichnet, dass** der bugfenderartige Vorsprung (9, 17) einen Durchmesser von 0,5 mm bis 3,0 mm aufweist.

12. Verwendung eines Fahrzeugluftreifens nach Anspruch 2 auf Fahrzeugen mit Achsen mit zwei Achspositionen, mit einem asymmetrischen Laufstreifen mit einem bei montiertem Reifen der Fahrzeugaußenseite zugeordneten und mit einem bei montiertem Reifen der Fahrzeuginnenseite zugeordneten Laufstreifenbereich, wobei, betrachtet bei Sicht nach vorne, bei dem auf der rechten Achsposition montiertem Reifen die an Blockeckbereichen Stege (8, 8', 8") aufweisende Blockreihe (1', 2', 11', 12') in dem der Fahrzeugaußenseite zugeordneten Laufstreifenbereich vorgesehen ist und dass bei dem auf der linken Achsposition montiertem Reifen die an Blockeckbereichen Stege (8, 8', 8") aufweisende Blockreihe (1', 2', 11', 12') in dem der Fahrzeuginnenseite zugeordneten Laufstreifenbereich vorgesehen ist.

## Claims

1. Vehicle pneumatic tyre with a tread strip with at least one row of blocks (1', 2', 11', 12') which is delimited by at least one circumferential groove (5, 14), with blocks (1, 2, 11, 12) separated from one another by way of transverse grooves (3, 13), with block flanks (1a, 1b, 16a, 16b), the blocks (1, 2, 11, 12) having, on the circumferential groove (5, 14), in each case one block corner region (6, 16), on which a web (8, 8', 8") which protrudes into the circumferential groove (5, 14) and is seated on the bottom of the circumferential groove (5, 14) is configured, which web (8, 8', 8") has, at its highest point, a height in the radial direction of from 10% to 50% of the profile depth, and is delimited by side faces (8a, 8b, 8"a, 8"b) which run to the block flanks (1a, 1b, 16a, 16b) and taper off at the latter, **characterized in that** the side faces (8a, 8b, 8"a, 8"b) of the webs (8, 8', 8") are curved concavely with respect to one another at least in sections in a top view and, as viewed in cross section, are inclined with respect to the radial direction at least in sections, a bow fender-like projection (9, 17) which runs around the pointed block corner region (6, 16) being configured on the webs (8, 8', 8").

2. Vehicle pneumatic tyre according to Claim 1, **characterized in that** the webs (8, 8', 8") are configured on block corner regions of blocks (1, 2, 11, 12) of a row of blocks (1', 2', 11', 12') which is delimited on the tread strip inner side by way of the circumferential groove (5, 14).

3. Vehicle pneumatic tyre according to Claim 1 or 2, **characterized in that** the tread strip is of directional configuration, and **in that** the webs (8, 8', 8") are provided on the block corner regions (6, 16) which, during rolling of the tyre in the case of forward driving, first of all pass into contact with the underlying surface.

4. Vehicle pneumatic tyre according to one of Claims 1 to 3, **characterized in that** the tread strip is of directional configuration, and **in that** the row of blocks (11', 12') is separated from a further row of blocks (11', 12') by way of the circumferential groove (14), the blocks (11, 12) from the one row of blocks (11', 12') being offset in the circumferential section with respect to the blocks (11, 12) from the further row of blocks (11', 12'), webs (8") likewise being arranged on block corner regions (16) of the blocks (11, 12) of the further row of blocks (11', 12'), with the result that, from the block corner regions (16) of the blocks (11, 12), webs (8") protrude in an alternating manner into the circumferential groove (14).

5. Vehicle pneumatic tyre according to one of Claims 1 to 4, **characterized in that** the height of the webs (8, 8', 8") in the radial direction at their highest point is up to 25% of the profile depth.

6. Vehicle pneumatic tyre according to one of Claims 1 to 5, **characterized in that** the height of the webs (8, 8', 8") over their extent is either constant or decreases continuously towards the free ends of the webs (8, 8', 8") to from 0% to 10% of the profile depth.

7. Vehicle pneumatic tyre according to one of Claims 1 to 6, **characterized in that**, on block corner regions (6, 16), on which webs (8, 8', 8") are configured, the block flanks (1a, 1b, 16a, 16b) converge at an angle (α) of from 40° to 110°, in particular of from 80° to 100°, in a top view.

8. Vehicle pneumatic tyre according to one of Claims 1 to 7, **characterized in that** a groove passage (5', 14') runs in the circumferential groove (5, 14) between that end section of the web (8, 8', 8") which is situated in the circumferential groove (5, 14) and the adjacent positive profile in the axial direction, which groove passage (5', 14') has, at its narrowest point, a width (b₂, b₄) of from 0.5 mm to 8.0 mm, in particular of from 2.0 mm to 6.0 mm.

9. Vehicle pneumatic tyre according to one of Claims 1 to 8, **characterized in that** the webs (8, 8', 8") are rounded at their ends which lie in the circumferential groove (5, 14).

10. Vehicle pneumatic tyre according to one of Claims 1 to 9, **characterized in that** the bow fender-like projection (9, 17) has a height in the radial direction of from 5% to 25% of the profile depth.

11. Vehicle pneumatic tyre according to one of Claims 1 to 10, **characterized in that** the bow fender-like projection (9, 17) has a diameter of from 0.5 mm to 3.0 mm.

12. Use of a vehicle pneumatic tyre according to Claim 2 on vehicles with axles with two axle positions, with an asymmetrical tread strip with a tread strip region which is assigned to the vehicle outer side in the case of a fitted tyre, and, as viewed towards the front, with a tread strip region which is assigned to the vehicle inner side in the case of a fitted tyre, the row of blocks (1', 2' 11', 12') which has webs (8, 8', 8") on block corner regions being provided, in the case of the tyre fitted on the right-hand axle position, in the tread strip region which is assigned to the vehicle outer side, and, in the case of the tyre fitted on the left-hand axle position, the row of blocks (1', 2', 11', 12') which has webs (8, 8', 8") on block corner regions being provided in the tread strip region which is assigned to the vehicle inner side.

## Revendications

1. Pneumatique de véhicule comprenant une bande de roulement dotée d'au moins une rangée de blocs (1', 2', 11', 12') limitée par au moins une rainure circonférentielle (5, 14) et dotée de blocs (1, 2, 11, 12) à flancs de bloc (1a, 1b, 16a, 16b) séparés les uns des autres par des rainures transversales (3, 13), dans lequel les blocs (1, 2, 11, 12) présentent au niveau de la rainure circonférentielle (5, 14) respectivement une zone d'angle de bloc (6, 16) sur laquelle est réalisée une nervure (8, 8', 8") posée sur le fond de la rainure circonférentielle (5, 14) et faisant saillie dans la rainure circonférentielle (5, 14),
ladite nervure présentant dans la direction radiale en son point le plus élevé une hauteur de 10 % à 50 % de la profondeur de sculpture et étant limitée par des surfaces latérales (8a, 8b, 8"a, 8"b) s'étendant en direction des flancs de bloc (1a, 1b, 16a, 16b) et se terminant au niveau de ceux-ci,
**caractérisé en ce qu'**en vue de dessus, les surfaces latérales (8a, 8b, 8"a, 8"b) des nervures (8, 8', 8") sont au moins par endroits courbées de manière concave les unes par rapport aux autres, et vues en section transversale, elles sont inclinées au moins par endroits par rapport à la direction radiale, une saillie (9, 17) en forme de défense de proue, entourant la zone d'angle de bloc pointue (6, 16) étant réalisée sur les nervures (8, 8', 8").

2. Pneumatique de véhicule selon la revendication 1, **caractérisé en ce que** les nervures (8, 8', 8") sont réalisées sur des zones d'angle de bloc des blocs (1, 2, 11, 12) d'une rangée de blocs (1', 2', 11', 12') qui est limitée par la rainure circonférentielle (5, 14), côté intérieur de la bande de roulement.

3. Pneumatique de véhicule selon la revendication 1 ou 2, **caractérisé en ce que** la bande de roulement est réalisée en tenant compte du sens de la marche, et **en ce que** les nervures (8, 8', 8") sont prévues sur les zones d'angle de bloc (6, 16) entrant en premier dans le sol lorsque le pneumatique roule en marche avant.

4. Pneumatique de véhicule selon l'une quelconque des revendications 1 à 3, **caractérisé en ce que** la bande de roulement est réalisée en tenant compte du sens de la marche, et **en ce que** la rangée de blocs (11', 12') est séparée d'une autre rangée de blocs (11', 12') par la rainure circonférentielle (14), les blocs (11, 12) issus de ladite une rangée de blocs (11', 12') étant décalés dans la direction circonférentielle par rapport aux blocs (11, 12) issus de l'autre rangée de blocs (11', 12'), dans lequel, sur des zones d'angle de bloc (16) des blocs (11, 12) de l'autre rangée de blocs (11', 12'), des nervures (8") sont également disposées de sorte qu'à partir des zones d'angle de bloc (16) des blocs (11, 12), des nervures (8") font en alternance saillie dans la rainure circonférentielle (14).

5. Pneumatique de véhicule selon l'une quelconque des revendications 1 à 4, **caractérisé en ce que** la hauteur des nervures (8, 8', 8"), à leur endroit le plus élevé, dans la direction radiale mesure jusqu'à 25 % de la profondeur de sculpture.

6. Pneumatique de véhicule selon l'une quelconque des revendications 1 à 5, **caractérisé en ce que** la hauteur des nervures (8, 8', 8") sur leur étendue est soit constante, soit diminue en continu jusqu'à 0 % à 10 % de la profondeur de sculpture en direction des extrémités libres des nervures (8, 8', 8").

7. Pneumatique de véhicule selon l'une quelconque des revendications 1 à 6, **caractérisé en ce que** sur les zones d'angle de bloc (6, 16), sur lesquelles des nervures (8, 8', 8") sont réalisées, les flancs de bloc (1a, 1b, 16a, 16b) convergent en vue de dessus selon un angle (α) de 40° à 110°, en particulier de 80° à 100°.

8. Pneumatique de véhicule selon l'une quelconque des revendications 1 à 7, **caractérisé en ce qu'**entre la section d'extrémité de la nervure (8, 8', 8") qui se trouve dans la rainure circonférentielle (5, 14) et l'élément de sculpture positif adjacent dans la direction axiale, un passage de rainure (5', 14') s'étend dans la rainure circonférentielle (5, 14) et présente à son endroit le plus étroit une largeur (b₂, b₄) de 0,5 mm à 8,0 mm, en particulier de 2,0 mm à 6,0 mm.

9. Pneumatique de véhicule selon l'une quelconque des revendications 1 à 8, **caractérisé en ce que** les nervures (8, 8', 8") sont arrondies au niveau de leurs extrémités situées dans la rainure circonférentielle (5, 14).

10. Pneumatique de véhicule selon l'une quelconque des revendications 1 à 9, **caractérisé en ce que** la saillie (9, 17) en forme de défense de proue présente dans la direction radiale une hauteur de 5 % à 25 % de la profondeur de sculpture.

11. Pneumatique de véhicule selon l'une quelconque des revendications 1 à 10, **caractérisé en ce que** la saillie (9, 17) en forme de défense de proue présente un diamètre de 0,5 mm à 3,0 mm.

12. Utilisation d'un pneumatique de véhicule selon la revendication 2 sur des véhicules équipés d'essieux à deux positions d'essieu, comprenant une bande de roulement asymétrique avec une zone de bande de roulement associée au côté extérieur du véhicule lorsque le pneu est installé et une zone de bande de roulement associée à un côté intérieur du véhicule lorsque le pneu est installé, dans lequel, en regardant vers l'avant, sur le pneumatique installé à la position d'essieu droite, la rangée de blocs (1', 2', 11', 12') présentant des nervures (8, 8', 8") sur les zones d'angle de bloc est prévue dans la zone de bande de roulement associée au côté extérieur du véhicule, et en ce que sur le pneumatique installé à la position d'essieu gauche, la rangée de blocs (1', 2', 11', 12') présentant des nervures (8, 8', 8") sur les zones d'angle de bloc est prévue dans la zone de bande de roulement associée au côté intérieur du véhicule.
